# EUROPEAN PATENT SPECIFICATION

(11) **EP 2 461 526 B1**
(45) Date of publication and mention of the grant of the patent: **29.10.2014**
(21) Application number: 10306353.3
(22) Date of filing: 06.12.2010
(51) Int. Cl.: H04L 12/64, H04Q 11/00, H04J 14/02, H04L 12/751, H04L 12/711, H04L 12/771, H04L 12/721, H04L 12/801, H04L 12/707, H04L 12/741

(54) **Method, Traffic Node and Central Station for building Bypasses**
Verfahren, Verkehrsknoten und Zentralstation zum Aufbauen eines Bypasses
Procédé, noeud de trafic et station centrale pour la construction de contournements

(43) Date of publication of application: 06.06.2012
(73) Proprietor: ALCATEL LUCENT, 92100 Boulogne-Billancourt (FR)
(72) Inventor: Milbrandt, Jens, 71254, Ditzingen (DE)
(74) Representative: Wetzel, Emmanuelle

(56) References cited:
- US-A- 5 841 990
- US-A1- 2002 122 228
- US-A1- 2009 022 090

## Description

### Field of the Invention

The invention relates to a method for providing data as basis for a decision to build bypasses in a telecommunications network and to a traffic node.

### Background

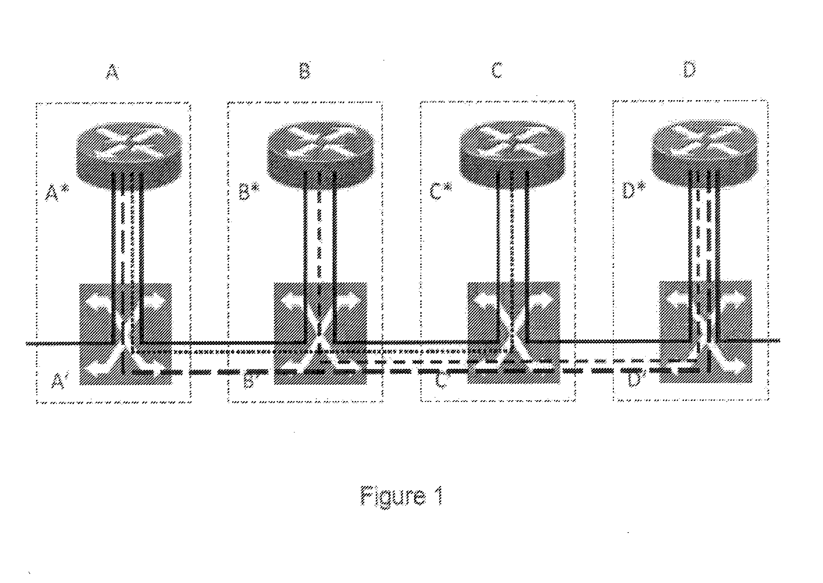

Based on a detail of such telecommunications network, as shown in figure 1, the background of this invention will be described in short. Telecommunications networks are built up of a multiple of inter-meshed traffic nodes. The longer a distance is between two communicating devices, be it users or traffic nodes or other such equipment, the more traffic nodes are in between the communicating devices.

On connection buildup normally there is the possibility of choosing between a couple of different ways via different traffic nodes. That is not the problem dealt with here.

Nowadays, where we have more packet switching than the former circuit switching, computer performance in the traffic nodes is by far needed more for passing through the individual traffic than for connection buildup. In times where the power consumption is a major concern ("green technology"), avoiding individual treatment of the particular connections is a welcome way of reducing the power consumption.

One way of avoiding such individual treatment is bypassing traffic nodes that are lying in-between the entrance of a communication into the telecommunications network ("ingress") and its leaving this network ("egress").

As shown in figure 1, traffic nodes like A, B, C, and D consist of a packet switch like A*, B*, C*, and D* and a circuit switch like A', B', C', and D'. Between neighboring nodes exist communication links, nowadays mostly optical fibers. Such communication links extend between inputs and outputs of the concerned circuit switches.

Traffic incoming on either of the communication links so can either be circuit switched directly to an output versus either of the other communication links or passed on to the respective packet switch.

Traffic being circuit switched from one communication link to an other one bypasses the respective traffic node. But there is no possibility to treat in different manner individual traffic flows on one and the same link. All packets entering the node on one specific communication link thus will leave it in the same order on the same outgoing communication link.

In contrast thereto incoming traffic being passed on by the circuit switch to its assigned packet switch there can be treated completely individually and switched to any of the outgoing communication links or even remain in the area of this node. Likewise traffic originating in the area of this node can be inserted into traffic leaving on any of the communication links.

In practice there will be lots of transit traffic that is incoming traffic that will jointly leave the node on one and the same outgoing communication link. Such traffic unnecessarily loads the packet switch. But foreseeing bypasses between any pair of incoming and outgoing direction is inefficient, apart from the additional load to the preceding nodes for combining such traffic.

This problem intensifies when not only one node is bypassed (single-hop), but consecutive nodes are bypassed (multi-hop). Here in addition the individual possible bypasses interfere mutually.

Having a look on the known strategies to cope with single-hop or multi-hop bypasses shows that there does not even exist a satisfactory way for providing data as basis for a decision to build bypasses in a telecommunications network.

It is thus the problem underlying the invention to provide such data.

The document US 2002/0122228 A1 discloses a method for distributing data packets among different optical paths, wherein this distribution may be based upon the destination of the data packets.

In contrast to US 2002/0122228 A1, the method proposed herein uses a routing table that is partitioned in such a way, that traffic data leaving the network at a same other node is assigned to a same partition.

The document US 2009/00220090 A1 discloses a method of packet switching in a wireless communication device using a stored table.

### Summary

This problem according to the invention is solved by a method for providing data as basis for a decision to build bypasses in a telecommunications network according to independent Claim 1.

This problem further is solved by a traffic node according to independent Claim 4.

Thus in traffic nodes where traffic passes that may or may not be subject to be bypassed on its way to certain other traffic nodes traffic data are gathered in assignment to these other traffic nodes.

Such collection of traffic data is a very important precondition for any strategy on how to establish bypasses.

Further embodiments of the invention are to be found in the subclaims and in the following description.

### Brief Description of the Figures

In the following the invention will be described with the aid of the accompanying drawings, in which:
- Figure 1: shows a couple of traffic nodes according to the invention, including communication links between pairs of them being in a serial arrangement.
- Figure 2: shows a part of a greater telecommunications network with traffic nodes according to the invention and a central station according to the invention.
- Figure 3: shows switching and control means in a traffic node according to the invention.
- Figure 4: shows a routing table to be used in a method according to the invention.

### Description of the Embodiments

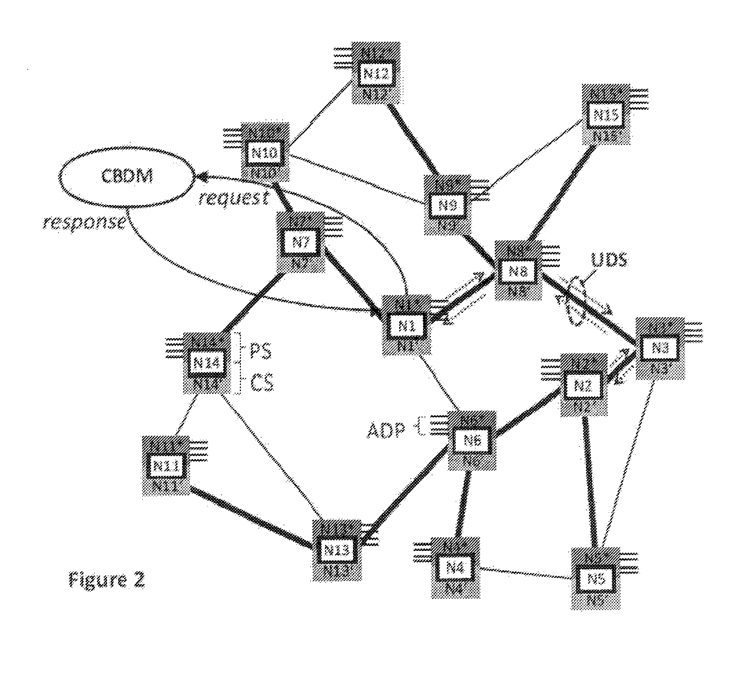

While, based on figure 1, the structure and operation of the main network elements already has been described principally, now, based on figure 2, a more detailed representation of the operation in a telecommunications network is described.

Figure 2 shows a number of, here 15, traffic nodes N1, N2, ..., N15, and a central control station, here called central bypass decision maker CBDM.

Each such traffic node includes a circuit switch part CS, namely N1', N2', ..., N15', and a packet switch part PS, namely N1*, N2*, ..., N15*. Most of these traffic nodes, in this example all, are equipped with add-drop-ports ADP for dealing with local traffic. They also are equipped with ports for communication links for being interconnected with further traffic nodes.

The traffic nodes are meshed between one another as usual. There are some links that are to be preferred against others, shown with bold lines, while the others are depicted with regular lines. Within the sub-network depicted in bold lines there is always only one way between any pair of traffic nodes. Actually this is a spanning tree for traffic destined for node N2 and coming from either of the other nodes. Such spanning trees may be the result of wall known techniques like explicit routing or shortest path routing and mostly are specified by the provider. So for example traffic coming from traffic node N1 towards traffic node N8 and destined to further be passed on to traffic node N2 may be bypassed in traffic node N8 or N3 or both. The other links may be used preferably for other spanning trees extending to other nodes or, of course, when the specification needs to be changed.

Controlling the building of bypasses in any case needs an interaction between the participating traffic nodes. Such interaction may be performed centralized, in this case under the control of the already mentioned central bypass decision maker CBDM, or decentralized using distributed up-and-downstream signaling channels UDS between neighboring traffic nodes.

A traffic node, like traffic node N1, when determining, that it has sufficient traffic towards an other traffic node not directly connected to it, like traffic node N3, or N2, may trigger an initiation routine for establishing a bypass via one or more of the intermediate traffic nodes. The result could be either a bypass in traffic node N8 to direct traffic from traffic node N1 directly to traffic node N3 (single-hop-bypass), or a bypass bridging traffic nodes N8 and N3 to direct traffic from traffic node N1 directly to traffic node N2 (multi-hop-bypass).

Determining of having "sufficient traffic" preferably should consider not only a single value in time but a certain period of time. It also should consider reaching some given threshold.

A centralized solution using a central bypass decision maker CBDM could be based on requests sent by an initiating traffic node to the central bypass decision maker CBDM that could be answered by responses from there. Likewise it could be based on reports sent from participating traffic nodes to the central bypass decision maker CBDM and answered by orders from there.

A decentralized solution could be based on signaling sent downstream using the up-and-downstream signaling channels UDS and answered by the addressed other traffic nodes.

Of course such network, that in any case is a section of the one worldwide telecommunications network, may also includes traffic nodes of other kinds, like mere packet switches with no possibility of providing bypasses or mere circuit switches with no possibility of dealing with packet traffic or those not adapted to sustain the method described here.

In order to have a basis for such decisions, namely to determine that there is "sufficient traffic" for establishing a bypass, the invention proposes to gather traffic data in involved traffic nodes in such a way that assigning the data to respective other nodes in the telecommunications network is possible.

The traffic data gathered should undergo some kind of temporal averaging and aging using Moving Average measurements like the TEWMA method (TEWMA = Time Exponentially Weighted Moving Average).

In practice it is not worse to check for each and every possibility for establishing a bypass. Only where certain likelihood is known that "sufficient traffic" will be reached there is a need to provide means for recognizing this. This invention proposes to preferably gather traffic data in such a way that assigning the data to those nodes is possible, where such traffic leaves this network, that is to the exits of such traffic or to other nodes being "potentially large" traffic sinks.

Such gathering of traffic data can be made by using anyway existing routing tables. It is suggested to partition those routing tables such that to each other involved node of the telecommunications network a partition is assigned.

The whole traffic, the data of which is entered in one partition of such partitioned routing table, thus can easily be summed up, for example assigning byte counters to each partition to implement the above mentioned TEWMA method. On reaching a predefined threshold some kind of initiation routine for establishing a bypass via one or more of the intermediate traffic nodes is started.

Instead of using partitions of routing tables of course other kinds of gathering traffic data could be used like regular queries in the routing tables or the use of separate tables set up for such purpose.

As already indicated, establishing a bypass may be controlled either by a central station, here the central bypass decision maker CBDM, preferably via request and response, or decentral using up-and-downstream signaling channels UDS along the normal traffic paths. In both cases establishing of a bypass has to be weighed against other possible establishing of bypasses.

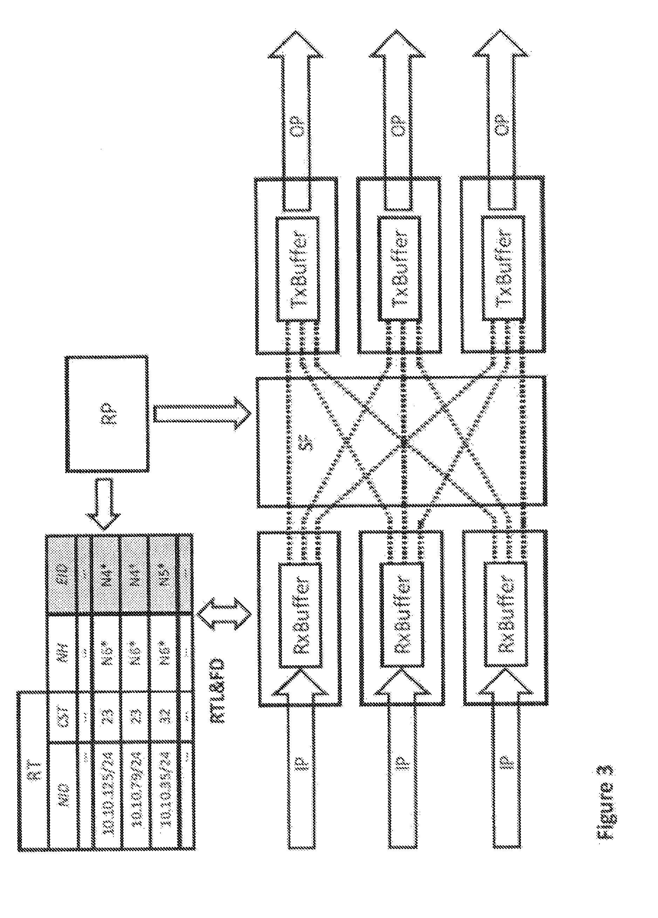

Figure 3 shows the typical structure and function of a packet switch. Transmission links with incoming packets IP, here shown three links, end on receive buffers, RxBuffer. Via a switching fabric SF the packets are forwarded to transmit buffers, TxBuffer, and leave as outgoing packets OP via either of the transmission links. In addition there are incoming packets IP and outgoing packets OP from and to add-drop-ports ADP in the same way as from and to transmission links.

A routing table RT assigned to this switch is shown top left. It includes lines for the traffic data and columns for a network ID, NID, cost, CST, next hop, NH, and egress ID, EID for each set of traffic data. The entries in this routing table RT stem from standard routing protocol actions and are used as hinted at by a double arrow representing a routing table lookup and forwarding decision procedure RTL&FD. A routing processor RP is using the contents of the routing table RT to act on the switching fabric SF to correctly switch the individual packets between receive buffers, RxBuffer, and transmit buffers, TxBuffer.

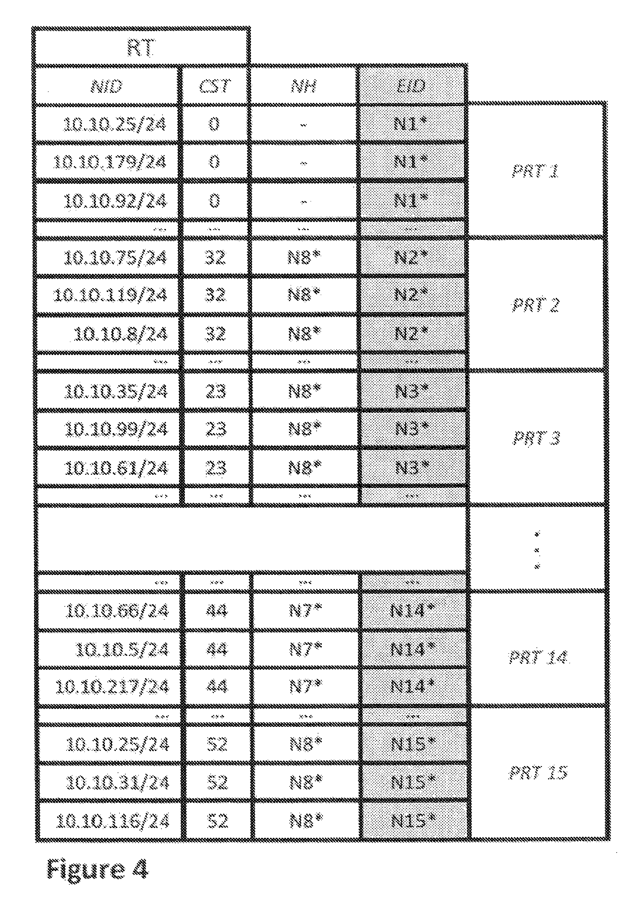

A preferred structure of such routing table RT, adapted to perform the method according to the present invention is shown in figure 4. The known routing table RT as shown in figure 3 here is partitioned in partitions PRT 1, PRT 2, ..., PRT 15. Partition PRT 1 contains all traffic data of traffic leaving the network at the packet switch part N1* of traffic node N1; partition PRT 2 contains all traffic data of traffic leaving the network at the packet switch part N2* of traffic node N2, and so on. Traffic in partition PRT 1 already has reached its destination; there is no entry for cost, CST, and no next hop, NH. It is easy now to cope with the traffic data within each partition for example assigning byte counters to each partition to implement the above mentioned TEWMA method as already mentioned and to thus find out candidates for bypasses.

## Claims

1. Method for providing data as basis for a decision to build bypasses in a telecommunications network with a multiple of inter-meshed traffic nodes (A, B, C, D; N1, ..., N15), at least a part of which is also representing exits from the telecommunications network, **wherein** in each involved traffic node traffic data (RT) are gathered in such a way that assigning the data to respective other nodes, that are exits from the telecommunications network, is possible,
**characterized**
**in, that** a routing table (RT) is used that is partitioned (PRT1, ..., PRT15) in such a way that traffic data leaving the network at a same of said other nodes is assigned to a same partition (PRT1, ..., PRT15 ) and can be summed up,
**in, that** the gathered traffic data (RT) cover a predefined period of time,
**in that** the gathered traffic data undergoes temporal averaging and aging using Moving Average measurement,
and **in that** on reaching a predefined threshold of the traffic data (RT) in a traffic node (A, B, C, D; N1, ..., N15) versus a certain one of the other nodes (A, B, C, D; N1, ..., N15) of the telecommunications network an initiation routine for establishing a bypass via one or more of the intermediate traffic nodes (A, B, C, D; N1, ..., N15) is started.

2. Method according to claim 1, **characterized in, that** the initiation is evaluated in a central station (CBDM).

3. Method according to claim 1, **characterized in, that** the initiation is evaluated in the intermediated traffic nodes (A, B, C, D; N1, ..., N15).

4. Traffic node (A, B, C, D; N1, ..., N15) for a telecommunications network with a multiple of inter-meshed traffic nodes (A, B, C, D; N1, ..., N15), at least a part of which is also representing exits from the telecommunications network, **wherein** in the traffic node (A, B, C, D; N1, ..., N15) storage means are present serving the gathering of traffic data (RT) and built such (PRT1, ..., PRT15) that assigning data to individual other nodes ,that are exits from the telecommunications network, is possible,
**characterized**
**in that** said storing means are adapted to contain a routing table (RT) that is partitioned (PRT1, ..., PRT15) in such a way that traffic data leaving the network at a same of said other nodes is assigned to a same partition (PRT1, ..., PRT15) and can be summed up,
**in that** the gathered traffic data (RT) cover a predefined period of time,
**in that** said storage means are adapted to gather said gathered traffic data, such that it undergoes temporal averaging and aging using Moving Average measurement,
**in that** it includes evaluation and transmit means to initiate building a bypass,
and **in that** on reaching a predefined threshold of the traffic data (RT) in a traffic node (A, B, C, D;
N1, ..., N15) versus a certain one of the other nodes (A, B, C, D; N1, ..., N15) of the telecommunications network said evaluation and transmit means initiate an initiation routine for establishing a bypass via one or more of the intermediate traffic nodes (A, B, C, D; N1, ..., N15).

5. Traffic node according to claim 4, **characterized in, that** it includes means for building bypasses and first control means (CBDM) for coping with an initiation routine to build a bypass.

## Patentansprüche

1. Verfahren zur Bereitstellung von Daten als Grundlage für eine Entscheidung, Bypässe in einem Telekommunikationsnetzwerk mit einem Vielfachen von miteinander vermaschten Verkehrsknoten (A, B, C, D; N1, ..., N15), von denen zumindest ein Teil ebenfalls Ausgänge aus dem Telekommunikationsnetzwerk darstellt, aufzubauen, wobei in jedem beteiligten Verkehrsknoten Verkehrsdaten (RT) derart erfasst werden, dass die Zuordnung der Daten zu jeweiligen anderen Knoten, welche Ausgänge aus dem Telekommunikationsnetzwerk sind, möglich ist,
**dadurch gekennzeichnet,**
**dass** eine Routing-Tabelle (RT) verwendet wird, welche derart partitioniert (PRT, ..., PRT15) ist, dass Verkehrsdaten, die das Netzwerk an einem selben der besagten anderen Knoten verlassen, einer selben Partition (PRT1, ..., PRT15) zugeordnet werden und aufsummiert werden können,
**dass** die erfassten Verkehrsdaten (RT) eine vordefinierte Zeitspanne abdecken,
**dass** die erfassten Verkehrsdaten einer zeitlichen Mittelwert- und Alterungsberechnung unter Verwendung einer gleitenden Durchschnittsmessung unterzogen werden,
und **dass** bei Erreichen eines vordefinierten Grenzwertes der Verkehrsdaten (RT) in einem Verkehrsknoten (A, B, C, D; N1, ..., N15) im Vergleich zu einem bestimmten der anderen Knoten (A, B, C, D; N1, ..., N15) des Telekommunikationsnetzwerks eine Initiierungsroutine für den Aufbau eines Bypasses über einen oder mehrere der dazwischenliegenden Verkehrsknoten (A, B, C, D; N1, ..., N15) gestartet wird.

2. Verfahren nach Anspruch 1, **dadurch gekennzeichnet, dass** die Initiierung in einer Zentralstation (CBDM) bewertet wird.

3. Verfahren nach Anspruch 1, **dadurch gekennzeichnet, dass** die Initiierung in den dazwischenliegenden Verkehrsknoten (A, B, C, D; N1, ..., N15) bewertet wird.

4. Verkehrsknoten (A, B, C, D; N1, ..., N15) für ein Telekommunikationsnetzwerk mit einem Vielfachen von miteinander vermaschten Verkehrsknoten (A, B, C, D; N1, ..., N15), von denen zumindest ein Teil ebenfalls Ausgänge aus dem Telekommunikationsnetzwerk darstellt, wobei in dem Verkehrsknoten (A, B, C, D; N1, ..., N15) Speichermittel vorhanden sind, die zur Erfassung von Verkehrsdaten (RT) dienen und derart gestaltet (PRT1, ..., PRT15) kind, dass die Zuordnung der Daten zu einzelnen anderen Knoten, welche Ausgänge aus dem Telekommunikationsnetzwerk sind, möglich ist,
**dadurch gekennzeichnet,**
**dass** die besagten Speichermittel geeignet sind, eine Routing-Tabelle (RT) zu enthalten, welche derart partitioniert (PRT1, ..., PRT15) ist, dass Verkehrsdaten, welche das Netzwerk an einem selben der besagten anderen Knoten verlassen, einer selben Partition (PRT1, ..., PRT15) zugeordnet werden und aufsummiert werden können,
**dass** die erfassten Verkehrsdaten (RT) eine vordefinierte Zeitspanne abdecken,
**dass** die besagten Speichermittel dazu ausgelegt sind, die besagten erfassten Verkehrsdaten derart zu erfassen, dass sie einer zeitlichen Mittelwert- und Alterungsberechnung unter Verwendung einer gleitenden Durchschnittsmessung unterzogen werden,
**dass** er Bewertungs- und Sendemittel zur Initiierung des Aufbaus eines Bypasses umfasst,
und **dass** die besagten Bewertungs- und Sendemittel bei Erreichen eines vordefinierten Grenzwertes der Verkehrsdaten (RT) in einem Verkehrsknoten (A, B, C, D; N1, ..., N15) im Vergleich zu einem bestimmten der anderen Knoten (A, B, C, D; N1, ..., N15) des Telekommunikationsnetzwerks eine Initiierungsroutine für den Aufbau eines Bypasses über einen oder mehrere der dazwischenliegenden Verkehrsknoten (A, B, C, D; N1, ..., N15) initiieren.

5. Verkehrsknoten nach Anspruch 4, **dadurch gekennzeichnet, dass** er Mittel zum Aufbauen von Bypässen und erste Steuermittel (CBDM) zum Bewältigen einer Initiierungsroutine für den Aufbau eines Bypasses umfasst.

## Revendications

1. Procédé de fourniture de données comme base d'une décision pour établir des dérivations dans un réseau de télécommunications avec plusieurs noeuds de trafic entremêlés (A, B, C, D ; N1, ... , N15), dont au moins une partie représente aussi des sorties du réseau de télécommunications, dans lequel, dans chaque noeud de trafic impliqué, des données de trafic (RT) sont rassemblées de telle manière que l'attribution des données à d'autres noeuds respectifs, qui sont des sorties du réseau de télécommunications, soit possible,
**caractérisé**
**en ce qu'**on utilise une table de routage (RT) qui est partitionnée (PRT1, ... , PRT15) de telle manière que des données de trafic quittant le réseau au niveau d'un même noeud parmi lesdits autres noeuds soient attribuées à une même partition PRT1, ... , PRT15) et puissent être additionnées,
**en ce que** données de trafic rassemblées (RT) couvrent une période prédéfinie,
**en ce que** les données de trafic rassemblées subissent une moyenne et un vieillissement temporels en utilisent une mesure de la moyenne mobile,
et **en ce qu'**au moment d'atteindre un seuil prédéfini des données de trafic (RT) dans un noeud de trafic (A, B, C, D ; N1, ... , N15) par rapport à un certain noeud parmi les autres noeuds (A, B, C, D ; N1, ... , N15) du réseau de télécommunications, un sous-programmé d'initiation pour établir une dérivation par l'intermédiaire d'un ou de plusieurs des noeuds de trafic intermédiaires (A, B, C, D ; N1, ..., N15) est lancé.

2. Procédé selon la revendication 1, **caractérisé en ce que** l'initiation est évaluée dans une station centrale (CBDM).

3. Procédé selon la revendication 1, **caractérisé en ce que** l'initiation est évaluée dans les noeuds de trafic intermédiaires (A, B, C, D ; N1, ... , N15).

4. Noeud de trafic (A, B, C, D ; N1, ... , N15) pour un réseau de télécommunications avec plusieurs noeuds de trafic entremêlés (A, B, C, D ; N1, ... , N15), dont au moins une partie représente aussi des sorties du réseau de télécommunications, dans lequel dans le noeud de trafic (A, B, C, D; N1, .... N15) on trouve des moyens de stockage qui desservent le rassemblement de données de trafic (RT) et qui sont établis de sorte (PRT1, ..., PRT15) que l'attribution de données aux autres noeuds individuels, qui sont des sorties du réseau de télécommunications, soit possible,
**caractérisé**
**en ce que** lesdits moyens de stockage sont adaptés pour contenir une table de routage (RT) qui est partitionnée (PRT1, ... , PRT15) de telle manière que des données de trafic quittant le réseau au niveau d'un même noeud parmi lesdits autres noeuds soient attribuées à une même partition (PRT1, ... , PRT15) et puissent être additionnées,
**en ce que** les données de trafic rassemblées (RT) couvrent une période prédéfinie,
**en ce que** lesdits moyens de stockage sont adaptés pour rassembler lesdites données de trafic rassemblées, de sorte qu'elles subissent une moyenne et un vieillissement temporels en utilisant une mesure de la moyenne mobile,
**en ce qu'**il comprend des moyens d'évaluation et d'émission pour lancer l'établissement d'une dérivation,
et **en ce qu'**au moment d'atteindre un seuil prédéfini des données de trafic (RT) dans un noeud de trafic (A, B, C, D ; N1, ... , N15) par rapport à un certain noeud parmi les autres noeuds (A, B, C, D ; N1, ... , N15) du réseau de télécommunications, lesdits moyens d'évaluation et d'émission lancent un sous-programme d'initiation pour établir une dérivation par l'intermédiaire d'un ou de plusieurs des noeuds de trafic intermédiaires (A, B, C, D ; N1, ... , N15).

5. Noeud de trafic selon la revendication 4, **caractérisé en ce qu'**il comprend des moyens pour établir des dérivations et des premiers moyens de commande (CBDM) pour gérer un sous-programme d'initiation pour établir une dérivation.
